# EUROPEAN PATENT SPECIFICATION

(11) **EP 0 619 200 B1**
(45) Date of publication and mention of the grant of the patent: **09.07.1997**
(21) Application number: 93302431.7
(22) Date of filing: 29.03.1993
(51) Int. Cl.: B60L 11/18

(54) **Stepped compound voltage control circuit of battery in combination with field-control DC motor driving circuit**
Gestaffelte und gekoppelte Batterienspannungsregelung kombiniert mit einer gleichstrommotorregelung mit Feldregelung
Circuit de commande de tension composée et étagée de batteries en combinaison avec un circuit de commande de moteur à courant continu à contrôle de flux

(43) Date of publication of application: 12.10.1994
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- EP-A- 0 456 345
- FR-A- 2 437 103
- GB-A- 1 590 375

## Description

This invention relates to a stepped compound voltage power supply and field control arrangement.

Since batteries are convenient to install, they are widely used for a variety of appliances, such as electric vehicles etc. However, most batteries, whether powered by fuel or thermal energy, or solar energy, are physically limited to a single basic voltage. Generally speaking, one can make a battery's voltage and capacity selectable only by employing multiple, series-connected batteries, and supplying the output in accordance with the needs of the load by means of a stepped voltage, by controlling the output using serial linear members, or by operating the power supply using switches.

G3-A-1 590 375 describes a known multi-cell battery system, and EP-A-0 456 345 describes known apparatus for optimising control of a dc motor.

The present invention provides a stepped compound voltage power supply and field control arrangement for a DC motor having at least one field winding and an armature, the arrangement comprising a controller and a stepped compound voltage supply constituted by a plurality of DC power supply units arranged to be connected in series and/or parallel connections to provide a stepped output voltage, the controller including first and second independently-operable control means, wherein the first control means is provided to change the intensity of the field generated by the field winding, wherein the armature is connected to the stepped compound voltage power supply by means of a series-connected solid state switch for adjusting the output voltage, and wherein the second control means controls the solid state switch, thereby to control the motor speed more continuously than is provided solely by the variation in the supply of stepped voltage to the armature.

This is an efficient circuit design which involves providing a multiple output stepped compound voltage, and which further includes a field intensity control for enabling a DC motor control circuit to provide continuous linear control among stepped voltages in relation to the voltage output by slowly increasing the speed of the motor or by slow feedback reduction, and further by controlling the motor by means or a series connection with limited current solid state switch members to provide constant current output.

The invention will now be described in greater detail, by way of example, with reference to the drawings, in which:-
Fig. 1 is a block diagram of a field control DC motor driving circuit according to a preferred embodiment of the invention;
Fig. 2 shows an embodiment of a preferred compound voltage supply formed by two-pole and two-throw switches parallel connected with diodes for the DC motor armature control circuit of Fig. 1;
Fig. 3 shows a linearly adjusted compound voltage waveform;
Fig. 4 shows a pulse modulated compound voltage waveform;
Fig. 5 is a schematic diagram of a second preferred compound voltage supply formed by a plurality of two-pole and two-throw switches for the DC motor armature control circuit shown in Fig. 1;
Fig. 6 is a schematic diagram of a third preferred compound voltage supply formed by single-pole switches and diodes for the DC motor armature control circuit shown in Fig. 1;
Fig. 7 is a schematic diagram of a fourth preferred compound voltage supply formed by solid state switches and diodes for the DC motor armature control circuit of Fig. 1;
Fig. 8 is a diagram of linearly adjusted compound and stepped basic voltage waveforms;
Fig. 9 is a diagram of pulse modulated compound and stepped basic voltage waveforms;
Fig. 10 is a schematic diagram of a fifth preferred compound voltage supply composed of a branched switch circuit with diodes for the DC motor armature control circuit of Fig. 1;
Fig. 11 shows a low voltage embodiment of the switch circuit of Fig. 10;
Fig. 12 shows an intermediate voltage embodiment of the switch circuit of Fig. 10;
Fig. 13 shows a high voltage embodiment of the switch circuit of Fig. 10;
Fig. 14 shows a sixth preferred compound voltage supply formed by single-throw switches combined with diodes for the DC motor armature control circuit of Fig. 1; and
Fig. 15 shows a seventh preferred compound voltage supply formed by solid state switch members for the DC motor armature control circuit of Fig. 1.

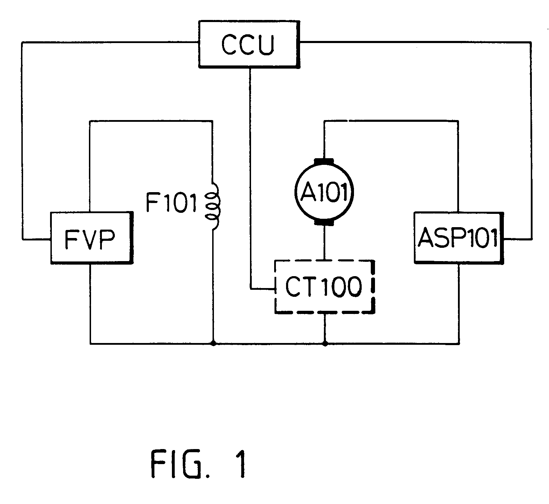

Referring to the drawings, Fig. 1 shows a preferred embodiment of a stepped compound voltage power supply and field control DC motor driving circuit, which includes a DC shunt or compound motor having at least a field winding F101 and an armature A101, and in which the armature can be driven by a driving circuit ASP101 constituted by the preferred stepped compound voltage power supply. The field generated by the winding F101 may be changed in intensity by connecting the winding in series or in parallel, by tapping the winding, by series connecting the winding to a variable resistance, or by means of variable resistance or field controller FVP made up of a power supply of variable resistance.

The range of speed change in the armature A101 caused by the aforesaid field intensity control, which is greater than the range of speed change in armature resulting from each step of stepped compound voltage, can be made available for alternative use and to enable the armature driving speed to achieve linear change without interruption. In addition, those skilled in the art will appreciate that principles of armature control can be provided for braking of a generator.

The field intensity and stepped voltage value may be subjected to manual control, CCU sequence control, or to the comparative value of the armature current and a manually-set value, the armature current feedback signal being provided by a detector CT100.

Except as specifically described below, the field control circuit shown in Fig. 1 may be conventional. The following different kinds of stepped compound voltage circuit which may be used therein are new, however, and will be described in detail.

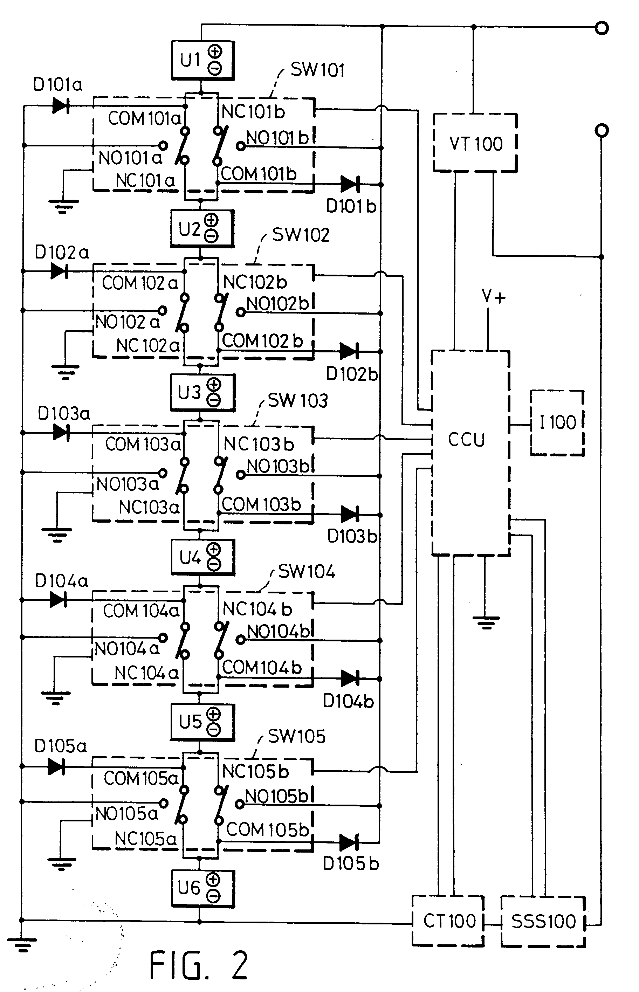

Fig. 2 shows an embodiment of a compound voltage control circuit which uses double-throw switches SW101 to SW105 in combination with diodes D101a to D105b to vary the battery connections, and thereby form a compound voltage output by alternatively switching between contacts multiply parallel connected to each end of the shunt diodes D101a to D105b so as to eliminate forward bias voltage drops and thermal losses across the diodes.

The circuit shown in Fig. 2 is further combined with a current detector CT100 and a linear or switch-mode solid state switch SSS100, and with a central control unit (CCU) to accept operation orders from an input device so as to control the electro-mechanical switches SW101 to SW105 and the solid state switch SSS100 to adjust the output voltage current flow or the output constant voltage, to adjust the current based on feedback from the current detector CT100, or to set the limits of the output current value.

By means of linear adjustment of the solid state switch SSS100, or by switching the switch on and off to serve as a PWM adjusting control, or by switching of the output voltage levels by connecting respective batteries and diodes in series via the on-off switches, the lower voltage state becomes a voltage minimum, and the higher voltage state becomes a voltage peak to provide continuous linear and PWM adjustment of the output voltage, the low ripple-wave voltage output which forms between the minimum voltage and the peak voltage being controlled by linear or PWM adjustment. When one of the electro-mechanical switches SW101 to SW105 is turned on, the solid state switch SSS100 is held in the on position, and when that switch is turned off, the solid state switch is cut off before the electro-mechanical switch is cut off to cut off the power supply and prevent sparking of the electro-mechanical switches.

Batteries U1 to U6 may be made up of two or more sets of battery units of identical voltage and capacity, or at least of identical voltage, including both linear and quadratic storage batteries, solar batteries, fuel-powered batteries, or thermal batteries and which are connected by means of a plurality of manual two-pole, two-throw switches SW101 to SW105, by drum switches, or by other electro-mechanical switch members, such as magnetic or mechanically-operated relays etc., which are disposed between the battery units and in direct series connection therewith. The common contacts of the two sets of poles of each two-pole switch are in replacement series with the open contacts such that the common contact of pole a is connected to the closed contact of pole b, and the common contact of pole b is connected to the closed contact of pole a; and each connected pair of contacts is respectively connected to the positive and negative terminals of a battery unit, with each output side common switch contact being connected to the positive pole of the pole unit, and also directly series connected to a diode connected between the open contact and further to the first battery unit and the positive output terminal of the voltage supply. The input side common contact of each switch is connected to the negative end of a pole unit, with the common contact and open contact being directly connected in series with a diode connected between the open contact and the negative terminal of the last battery and the negative terminal of the voltage supply. As indicated above, the electro-mechanical switch member can be composed of a switch directly driven by manual, magnetic or mechanical power.

The operation of the circuit of this embodiment is as follows:
1. By using a common driver symmetrically connected to an on/off switch, and wholly-open or wholly-closed contacts, the circuit can provide multiple choices for a compound voltage output.
2. When output, all multiple contacts of the diodes are closed, so that they can eliminate forward bias voltage drops and thermal losses therein.
3. When turned on/off, the diodes provide a linear stepped voltage for reducing the switch voltage, and are used as a transient current path to prolong the life of the switch contacts.

More specifically, the embodiment shown in Fig. 2 is made up of switches SW101 to SW105 connected between six sets of battery units U1 to U6, each having a voltage EB, to form five interconnected battery units. Each switch SW101 to SW105 has a diode D101a to D105a connected to it according to the principle that its input end multiples to pass a negative output; and each switch has a diode D101b to D105b connected to it according to the principle that its output multiples to pass a positive output. When common contacts COM105a and COM105b and closed, contacts NC101a and NC105b of the switches are connected, and all the battery units are connected in series with an output voltage of 6 x EB. When the switches SW102 and SW104 are controlled such that the respective common contacts COM102a and COM102b and COM104a and COM104b are connected to the open contacts N0102a and N1012b and N0104a and N1014b, the output voltage will be 2x EB, because the batteries U1 and U2, U3 and U4, and U5 and U6 are respectively series connected to each other to form three parallel connected units. Finally, when the switches SW101 to SW105 are controlled such that the common contacts COM101a to COM105b are all connected to open contacts N0101a to N0105b, the output voltage will be EB, because the batteries U1 to U6 are all parallel connected.

If the number of battery sets is increased to 24, one can obtain compound voltage levels of 1 x EB, 2 x EB, 3 x EB, 4 x EB, 6 x EB, 8 x EB, 12 x EB and 24 x EB. If the number of battery sets is increased to 36, one can obtain voltage levels 1 x EB, 2 x EB, 3 x EB, 4 x EB, 6 x EB, 9 x EB, 12 x EB, 18 x EB and 36 x EB, and so forth. The switches can be under manual control, or they can be controlled by a central control unit (CCU) and command input unit I100 so as to control the switches to turn the compound voltage on/off, or to further linearly adjust or switch open the solid state switch SSS100 at the output terminal so as to adjust and control the operation of the electro-mechanical switches and the solid state switch relative to the input value.

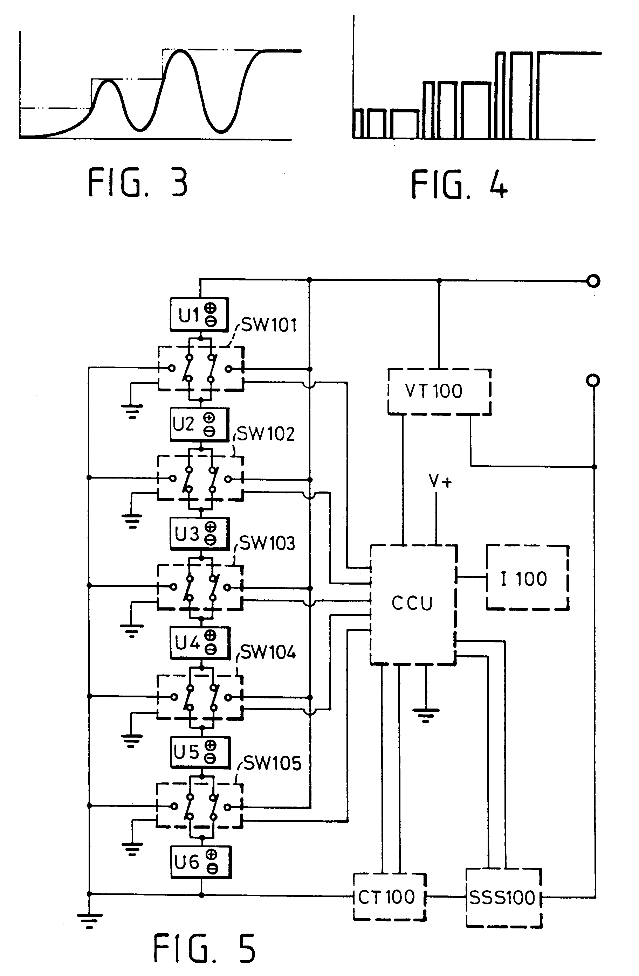

The stepped voltage output can be directly trimmed, either by means of the linear solid state switch SSS100, or by controlling one of the electro-mechanical switches SW101 to SW105, making the output higher than the needed output value, and then using the CCU to control the driven current of the linear solid state switch so as to obtain the adjustment of the linear output voltage. As is apparent from Fig. 3, if we want to trim the adjustment of a voltage larger than a battery unit's voltage level, we can do it by means of the electro-mechanical switch, and its thermal loss will be reduced.

The stepped voltage output can also be trimmed directly by means of the solid state switch, or by means of controlling one of the electro-mechanical switches, making the output higher than the needed output value, and then using a central processing unit (CPU) to control the driven pulse range of the switched solid state switch so as to obtain adjustment of the average output voltage. As is apparent from Fig. 4, if we want to trim the adjustment of a voltage larger than a battery unit's voltage level, we can do it by means of the electro-mechanical switch. Because it has an intrinsic stepped voltage, the ripple-wave value is lower than that provided by direct adjustment of the voltage.

In this embodiment, the output current circuit is preferably connected in series with the detector CT100 so as to check its output current value, and provide feedback to the controller CUU, according to an input unit instruction or a preset value in the controller, to control mutually and relatively the electro-mechanical switches and the solid state switch SS100. The output terminal may further be connected to a voltage detector VT100 so as to inspect its output voltage value, and also provide feedback to the controller CCU, to control the output voltage in accordance with instructions from an input device or a preset value, by mutual control of the solid state and electro-mechanical switches or by a preset value in the controller. As a result, the compound voltage supply of this embodiment can adjust to a load-side voltage change caused by unsteady power voltage, for example voltage drops in a battery due to drops arising from a reduction in residual storage power, in a manner similar to a non-compound voltage supply.

Those skilled in the art will appreciate that the above-described set operation order for the electro-magnetic and solid state switches may include manual, electro-magnetic, mechanical and flow control modes, and that the operation may be set or delayed by a mechanical command input or by an appropriate circuit. Also, in a variation of this embodiment, which is satisfactory when the power capacity can be lower, the diodes can be omitted, and the two-pole, two-throw switches can be directly turned on and off, as shown in Fig. 5.

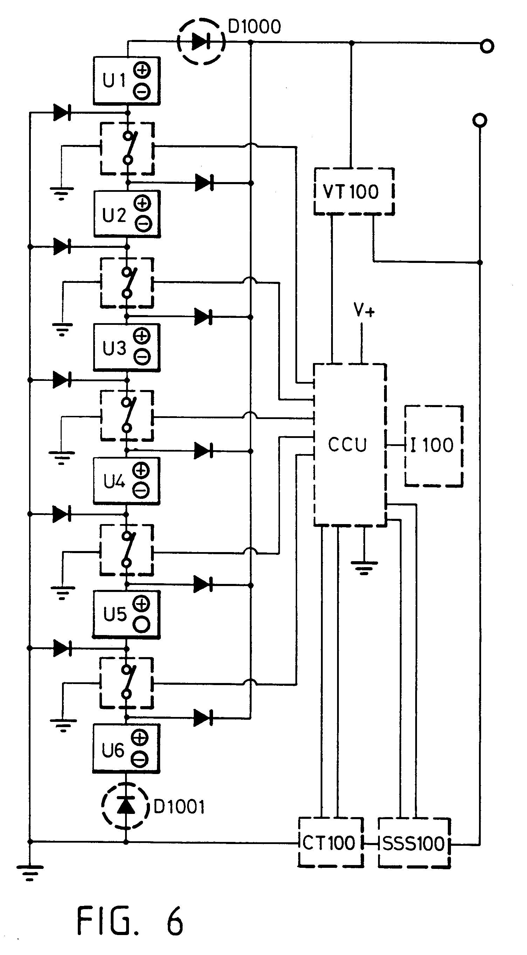

If circuit efficiency is not critical and the application is limited by space, we can connect single-pole, single-throw switches to the diodes so as to obtain an on/off switching compound voltage output function, and in practice we can further connect a solid state switch member, an output voltage current measuring member, an input unit, and a controller CCU to produce the same functions shown in Fig. 6. Those skilled in the art will appreciate that, in this embodiment, diodes D1000 and D1001 are used for stabilising the average output voltage, and can be disposed in the circuit as needed.

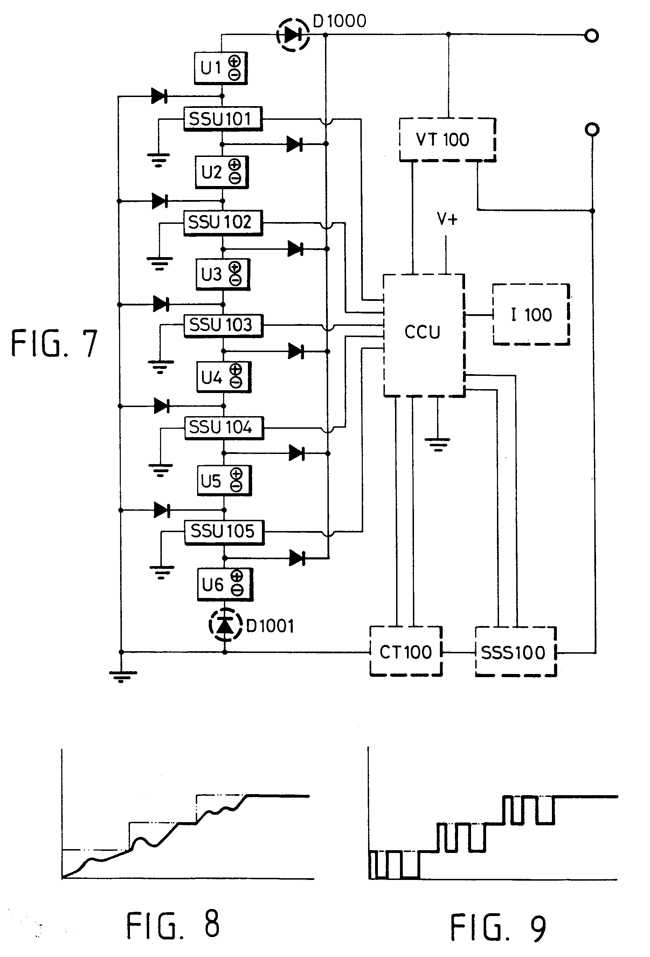

In a further variation of the preferred voltage supply, the electro-mechanical switches connected in series between the battery units in the circuit can be replaced by solid state switch members, and connected to diodes so as to form a compound voltage output, as shown in Fig. 7. This circuit otherwise has the same switching function as that of Fig. 6. In the circuit of Fig. 7, D1000 and D1001 again are diodes for smoothing the output voltage, and can be disposed in the circuit when needed. In this kind of circuit, we can further dispose electro-mechanical switch contacts on both sides of the solid state switch member to form units SSU101 to SSU105 so as to reduce voltage drops, losses, and heat by using the following operation order:

At the "on" position, operation of the individual solid state switches in the units SSU101 to SSU105 occurs before operation of the corresponding electro-mechanical switch. At the "off" position, operation of the individual solid state switches occurs after operation of the corresponding electro-mechanical switch.

When a solid state switch SS100 is used as the linear control or PWM switch control, an electro-mechanical switch which is in series therewith will not be operative. The solid state switch and the electro-mechanical switches can be controlled by the controller CCU, or can be manually, electro-magnetically, mechanically, or fluid dynamically controlled. By controlling the electro-mechanical switches, the output can surpass the needed output value, at which time the controller controls the driving current of each linear solid state switch member, or by controlling the battery unit which has a higher voltage between mutually serial or parallel connected battery units, the basic voltage of the battery units may be used to attain linear output voltage adjustment. Referring to Fig. 8, if a large adjustment in voltage level is needed, the electro-mechanical switches can be used to achieve a low heat loss.

By controlling the electro-mechanical switches, the output can surpass the needed output value, whereupon the controller CCU causes each solid state switch member to output a pulsed current, or controls the driving current of each linear solid state switch member, or exercises control over the battery unit which has the higher voltage level between mutually serial and parallel connected battery units, so as to attain average output voltage adjustment. For example, when the controller CCU causes the switch units SSU101, SSU102, SSU104 and SSU105 to be mutually connected, the switch unit SSU103 may be controlled by pulses to obtain the output shown in Fig. 9. If we want to trim the adjustment of a voltage larger than a single battery unit's voltage level, we can do so by means of one of the electro-mechanical switch units. Because of the stepped basic voltage, the ripple-wave value is lower than that obtained by adjustment of the whole voltage directly.

If the linear or pulse control ripple range and stepped basic voltage are made up of battery units of equal voltage, in order to seek an average or electrical consumption, the controller CCU can further be used to periodically alternate control of the solid state switch member, so as to switch between batteries to alter the basic voltage supply and adjusting range, or to control the pulse modulation to like effect.

We can further serially connect the measuring device CT100 to the output circuit so as to measure its output current value and feed it back to the controller CCU; and, according to input instructions or a preset value in the controller, control mutually and relatively the electro-mechanical switches and the solid state switch. At the output terminal, the measuring device VT100 can be parallel connected so as to measure the output voltage value, which is also fed back to the controller CCU; and, in accordance with input instructions or a preset value, mutually control the solid state switch and the electro-mechanical switches. Similar to the conventional steady voltage circuit, because this circuit has a standard potential, in addition to adjusting the voltage change caused by an unsteady load, it can adjust for load-side voltage changes caused by unsteady power voltage, such as drops in battery voltage due to reduced storage capacity.

As in the above embodiments, by including a serial connector solid state switch SS100 in the circuit, it functions as a constant adjusting component between the stepped voltage of linear and pulse control; that is, by means of linear adjustment or a PWM adjusting control disposed in series with a battery and a diode, and by appropriate control of the on-off switches to step the compound voltage output, the lower step becomes a voltage minimum and the higher step becomes a peak for a continuous linearly or PWM adjusted output voltage, and thus can be made into a low ripple-wave voltage output, or a slowly rising or slowly dropping voltage.

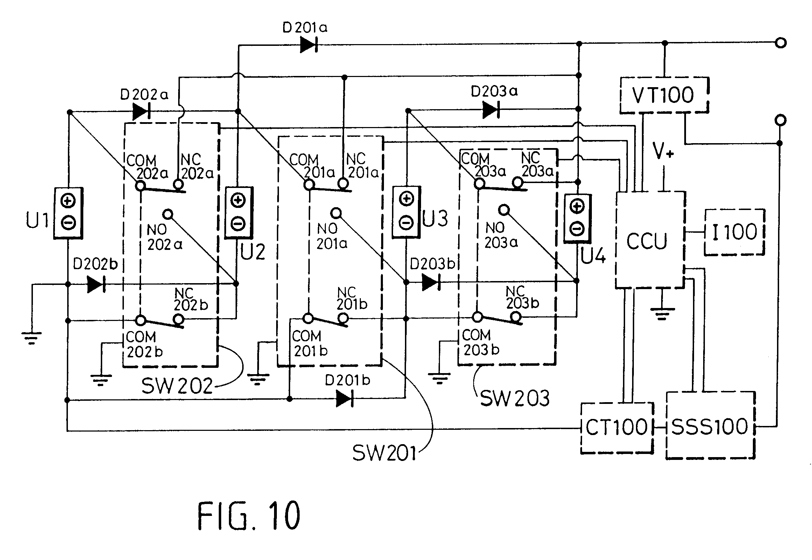

Another application of the preferred circuit is shown in Fig. 10. This embodiment includes two or more sets of battery units of like voltage and capacity, or at least of like voltage, and branch connected solid state or electro-mechanical switches for changing the serial and parallel connections between the battery units so as to further change their output voltage. When outputting, the circuit shunts the ends of the diodes so as to eliminate their direct voltage reducing the thermal loss, and can further be combined with a current measurement device and a linear or switch-mode solid state switch member, and with a central control unit CCU to accept operation orders from an input device so as to control electro-mechanical and solid state switches for adjusting the output voltage, or for setting the limits of output current value; and by means of linear adjustment or PWM control of the solid state switch member disposed in series with a battery and diode, in combination with control of the electro-mechanical switches to step the compound voltage so that a low step voltage comes a minimum, and a high step voltage becomes a peak, a low ripple-wave or PWM controlled voltage output can be obtained between the minimum and peak voltages. When one of the electro-mechanical switches is turned on, the time of operation of the solid state switch is suspended at the on position (subject to the resistance and capacitance load); and when it is turned off, the solid state switch is cut off before the electro-mechanical switches to cut off the power supply (subject to inductance, capacitance or resistance load), and thereby the electro-mechanical switches from sparking as they are turned on and off.

More specifically, in the embodiment of Fig. 10, the positive terminal of the battery unit U1 and the switch SW202 have a common contact COM202a directly series connected to a diode D202a, and thereby with the positive output terminal of the battery unit U2. A common contact COM201a of the switch SW201 is directly connected in series with a diode D201a, and is then connected to the positive output terminal of the voltage supply. The negative terminal of the battery U1 is connected to the negative output terminal of the circuit, and is connected in series with the common contact COM202b of the switch SW202, and is directly connected to a series-connected diode D202b. The positive output of the diode D202b is further connected to the open contact N0202a of the switch SW202 and to closed contact NC202b, which are commonly connected to the negative terminal of the battery U2. The negative end of the battery unit U1 is series connected to the common contact COM201b of the switch SW201, and then directly to a series-connected diode D201b, the output positive end of the diode D201b being connected to the closed contact NC201b of the switch SW201, the open contact NO201a and the common contact COM203b of a series-connected switch SW203, and to the negative terminal of a battery unit U3, and then directly to a series connected diode D203b. Finally, the positive output end of the diode D203b is connected to the closed contact NC203b of the switch SW203, and to the negative terminal of a battery unit U4. After the positive terminal of the battery unit U3 is connected to the common contact COM203a of the series connected switch SW203, they are directly connected to the diode D203a, the positive output end of the diode D203a being connected to the closed contact NC203a of the series connected switch SW203, and the positive terminal of the battery unit U4, and to positive output terminal of the circuit. Finally, the closed contact NC202a of the switch SW202 and the closed contact NC201a of the switch SW201 are connected to the positive output terminal of the circuit.

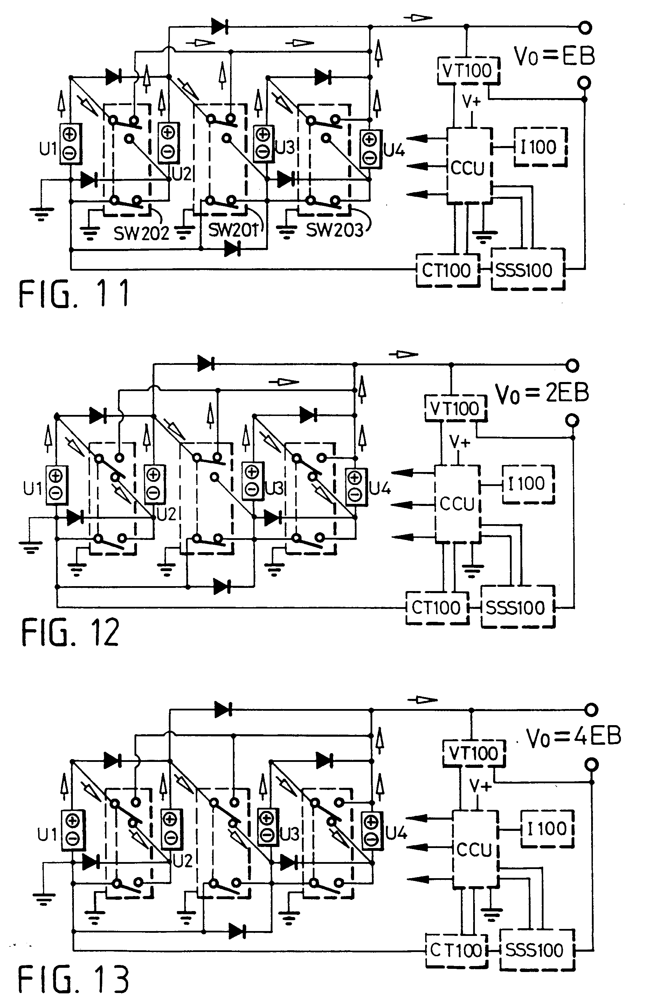

The circuit control of this embodiment is characterised in that:
1. When the switches SW201, SW202 and SW203 do not operate, the battery units U1 to U4 are connected to the switch contacts and output a low voltage because of their parallel connection; that as one times the battery unit voltage, as shown in Fig. 11, which is a view of the low voltage output situation of Fig. 10.
2. When the switches SW202 and SW203 are in operation, the battery unit U1 is serially connected to the battery unit U2, the battery unit U3 is serially connected to the battery U4, and these two serially-connected battery pairs are parallel connected to output a voltage of twice the individual battery unit voltage as shown in Fig. 12, which is a view of the medium voltage output situation for the circuit of Fig. 10.
3. When the switches SW201, SW202 and SW203 are in operation, the battery units U1 to U4 are serially connected so as to output a voltage of four times the battery unit voltage, as shown in Fig. 13, which is a view of the high output voltage situation for the circuit of Fig. 10.

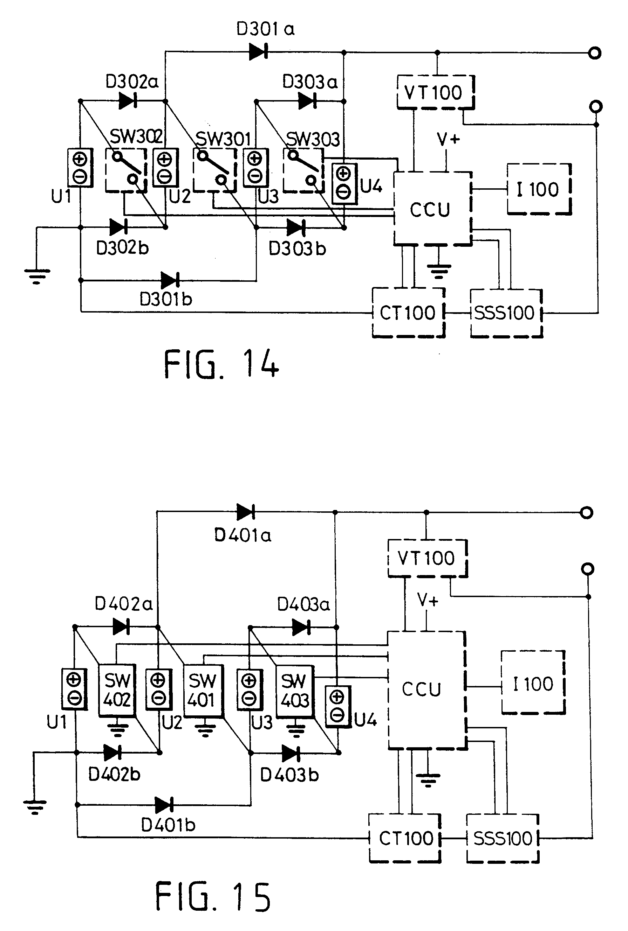

Fig. 14 shows an embodiment with single-pole switches in series with a solid state switch, and with batteries and diodes in series with a compound voltage DC motor armature control circuit, and further in combination with a current measurement device CT100, a linear or switch-mode solid state switch member SSS100, and a controller CCU connected to accept commands from an input device I100 so as to control the electro-mechanical and solid state switches for adjusting the output voltage, or to set the limits of the output current value. Again, by linear adjustment or PWM control of the solid state switch member which is disposed in series with the batteries and the diodes, together with appropriate control of the on-off switches which provide the basic stepped compound voltage output, the low voltage becomes a minimum, and the high voltage becomes a peak, and a low ripple-wave voltage output forms between the minimum peak voltages, and is controlled by linear adjustment or pulse modulation. Also, as in previous embodiments, when an electro-mechanical switch is turned on, the time of operation of solid state switch is suspended at the on position; and, when it is turned off, the operation time of the solid state switch precedes that of the electro-mechanical switches to cut off the power supply and thereby protect the electro-mechanical switches from sparking as they are turned on and off. In this embodiment, the circuit shown in Fig. 10 is combined with a current measuring device, and a linear switching solid switch member, and a controller CCU, to change the switches SW201, SW202 and SW203 into single-pole open switches SW301, SW302 and SW303, and respectively parallel connect the switch SW301 between the positive terminal of the battery unit U1 and the negative terminal of the battery unit U2, and to parallel connect the switch SW303 between the positive terminal of the battery unit U3 and the negative terminal of the battery unit U4. The diodes D301a, D301b, D302a, D302b, D303a and D303b are the same as the diodes D201a, D201b, D202a, D202b, D203a and D203b of Fig. 10, except that the series-connected switches cannot eliminate forward bias voltage drops of the diodes, all other functions being the same as for the circuit shown in Fig. 10.

Those skilled in the art will appreciate that, alternatively, solid state switch members SW401, SW402 and SW403 could replace the switches SW301, SW302 and SW303. Thus, referring to Fig. 15, the disposition and function of diodes D401a, D401b, D402b, D403a and D403b are the same as for the circuit of Figs. 10 and 14, and the switch functions of this circuit is the same as that of Fig. 14. In this embodiment, the solid state switch members still function as switches, and a series-connected solid state switch can be added to the circuit to provide linear functions as in Fig. 8, or to function as a continuous regulating element between the stepped voltages of the PWM control as in Fig. 9.

In conclusion, the present invention relates to a new design for a compound voltage supply of a DC motor armature control circuit, the stepped compound voltage supply being combined with a linear or pulse modulating solid state switch member, so as to attain non-sparking compound voltage switching and a low ripple-wave linear or PWM adjustable voltage output, and further may include feedback to provide a current limiting or set voltage output adjustment function. In addition, the preferred circuit may use two-phase solid state switch members to control inverse input voltage current value, so as to protect the circuit or to provide compatibility with a conventional bridge switch member positive-negative output interface by, in each half period, letting the circuit complete the output from low to high, and then from high to low to provide a periodic output, and thereby, by means of the synchronous relation between these two functions, gain an approximate sine wave (AC) output, and further control multiple voltage output voltage values during the polarity exchanging period and each half period.

## Claims

1. A stepped compound voltage power supply and field control arrangement for a DC motor having at least one field winding (F101) and an armature (A101), the arrangement comprising a controller (CCU) and a stepped compound voltage supply (ASP101) constituted by a plurality of DC power supply units (U1..U6) arranged to be connected in series and/or parallel connections to provide a stepped output voltage, the controller including first and second independently-operable control means, wherein the first control means is provided to change the intensity of the field generated by the field winding (F101), wherein the armature (A101) is connected to the stepped compound voltage power supply by means of a series-connected solid state switch (SS100) for adjusting the output voltage, and wherein the second control means controls the solid state switch, thereby to control the motor speed more continuously than is provided solely by the variation in the supply of stepped voltage to the armature.

2. An arrangement as claimed in claim 1, wherein the solid state switch (SS100) is a linear switch.

3. An arrangement as claimed in claim 1, wherein the solid state switch (SS100) is a chopped-wave switch or a pulse width modulated switch.

4. An arrangement as claimed in any one of claims 1 to 3, further comprising a plurality of electro-mechanical switches (SW101-105) each of which is connected between a respective pair of the power supply units, each of the electro-mechanical switches having first COM101a-105a) and second (COM101b-105b) common contacts, first (NC101a-105a) and second (NC101b-105b) normally-closed contacts, and first (NO101a-105a) and second (NO101b-105b) normally-open contacts, the first common contact of each electro-mechanical switch being connected to the second normally-closed contact of that switch, and the second common contact being connected to the first normally-closed contact of that switch.

5. An arrangement as claimed in claim 4, wherein the negative terminal of each power supply unit is connected to both the first common contact (COM101a-105a) and the second normally-closed contact (NC101b-105b) of an associated electro-mechanical switch, and the positive terminal of an adjacent power supply unit is connected to the first normally-closed contact (NC101a-105a) and the second common contact (COM101b-105b) of said switch; whereby, when each electro-mechanical switch is actuated, the respective common contacts are connected to respective normally-open contacts or to respective normally-closed contacts, thereby providing serial or parallel connection of each power supply unit.

6. An arrangement as claimed in claim 3 or claim 4, further comprising a plurality of pairs of diodes each pair having first and second diodes, each of the diodes having respective positive and negative terminals, wherein each pair of the diodes is connected to a respective electro-mechanical switch such that the first diode (D101a-105a) of that pair is connected by its positive terminal to the first normally-open contact (NO101a-105a) of that switch, and by its negative terminal to the first common contact (COM101a-105a) of that switch, and the second diode of that pair is connected by its positive terminal to the second common terminal (COM101b-105b) of that switch, and by its negative terminal to the second normally-open contact (NO101b-105b) of that switch.

7. An arrangement as claimed in claim 6, wherein the first diodes (D101a-105a) are connected between the solid state switch (SS100) and the first common contacts (COM101a-105a) of the electro-mechanical switches and the second diodes (D101b-105b) are connected to the second common contacts (COM101b-105b) and to the positive output terminal of the power supply.

8. An arrangement as claimed in claim 7, wherein the normally-open contacts (NO101-105) of the electro-mechanical switches are connected to the positive and negative output terminals of the power supply, and the normally-closed contacts (NC101-105) are connected between a respective pair of the power supply units.

9. An arrangement as claimed in any one of claims 6 to 8, further comprising means for controlling the solid state switch (SS100) to cut off power to the electro-mechanical switches during switching to prevent sparking and to eliminate losses across the first and second diodes.

10. An arrangement as claimed in claim 9, wherein the means for controlling the solid state switch (SS100) includes a current detector (CT100) connected to the armature, the current detector (CT100) feeding control signals back to the solid state switch.

11. An arrangement as claimed in claim 9, wherein the means for controlling the solid state switch includes a voltage detector (VT100) connected to the output of the compound voltage power supply, the voltage detector (VT100) feeding back control signals to the solid state switch.

12. An arrangement as claimed in any one of claims 1 to 11, wherein the means for controlling the solid state switch (SS100) is manual control means.

13. An arrangement as claimed in any one of claims 1 to 11, wherein the means for controlling the solid state switch (SS100) is a controller (CCU) responsive to inputs including feedback of the armature current.

14. An arrangement as claimed in any one of claims 1 to 13, wherein the means for changing the intensity of the field generated by the field winding (F101) is constituted by means for tapping the field winding.

15. An arrangement as claimed in any one of claims 1 to 13, wherein the means for changing the intensity of the field generated by the field winding (F101) is constituted by a variable resistance connected in series with the field winding.

16. An arrangement as claimed in any one of claims 1 to 13, wherein the means for changing the intensity of the field generated by the field winding (F101) is constituted by a field controller (FVP) made up of a power supply of variable resistance.

17. An arrangement as claimed in any one of claims 1 to 16, further comprising means for trimming the stepped output voltage.

18. An arrangement as claimed in claim 17, wherein the solid state switch (SS100) constitutes the means for trimming the stepped output voltage.

19. An arrangement as claimed in claims 4 and 17, wherein one of the electro-mechanical switches constitutes the means for trimming the stepped output voltage.

## Patentansprüche

1. Stufen-Verbundspannungsversorgung und Feldsteueranordnung für einen Gleichstrommotor mit zumindest einer Feldwicklung (F101) und einem Anker (A101), wobei die Anordnung einen Controller (CCU) und eine Stufen-Verbundspannungsversorgung (ASP101) aufweist, welche durch eine Vielzahl von Gleichstromversorgungseinheiten (U1-U6) gebildet ist, die in Reihen- und/oder Parallelverbindungen zur Bildung einer gestuften Ausgangsspannung verbindbar sind, wobei der Controller eine erste und zweite unabhängig betreibbare Steuereinrichtung aufweist, wobei die erste Steuereinrichtung zur Änderung der Intensität des durch die Feldwicklung (F101) erzeugten Feldes dient, wobei der Anker (A101) mit der Stufen-Verbundspannungsversorgung mittels eines reihenverbunden Festkörperschalters (SS100) zum Einstellen der Ausgangsspannung verbunden ist, und wobei die zweite Steuereinrichtung den Festkörperschalter steuert, so daß die Motorgeschwindigkeit kontinuierlicher steuerbar ist als allein durch die Änderung der Versorgung der Stufenspannung für den Anker.

2. Anordnung nach Anspruch 1, dadurch gekennzeichnet, daß der Festkörperschalter (SS100) ein Linearschalter ist.

3. Anordnung nach Anspruch 1, dadurch gekennzeichnet, daß der Festkörperschalter (SS100) ein Chopperwellen-Schalter oder ein impulsbreitenmodulierter Schalter ist.

4. Anordnung nach einem der Ansprüche 1 bis 3, gekennzeichnet durch einen Vielzahl elektromechanischer Schalter (SW101-105), von denen jeder zwischen einem jeweiligen Paar der Spannungsversorgungseinheiten angeschlossen ist, wobei jeder der elektromechanischen Schalter erste (COM101a-105a) und zweite (COM101b-105b) gemeinsame Kontakte, erste (NC101a-105a) und zweite (NC101b-105b) normalerweise geschlossene Kontakte sowie erste (NO101a-105a) und zweite (NO101b-105b) normalerweise offene Kontakte aufweist, wobei der erste gemeinsame Kontakt von jedem elektromechanischen Schalter mit dem zweiten normalerweise geschlossenen Kontakt des Schalters verbunden ist und wobei der zweite gemeinsame Kontakt mit dem ersten normalerweise geschlossenen Kontakt des Schalters verbunden ist.

5. Anordnung nach Anspruch 4, dadurch gekennzeichnet, daß der negative Anschluß von jeder Spannungsversorgungseinheit mit sowohl dem ersten gemeinsamen Kontakt (COM101a-105a) und dem zweiten normalerweise geschlossenen Kontakt (NC101b-105b) eines zugehörigen elektromechanischen Schalters verbunden ist, und der positive Anschluß einer anliegenden Spannungsversorgungseinheit mit dem ersten normalerweise geschlossenen Kontakt (NC101a-105a) und dem zweiten gemeinsamen Kontakt (COM101b-105b) des Schalters verbunden ist; wodurch, wenn jeder elektromechanische Schalter betätigt ist, die jeweiligen gemeinsamen Kontakte mit jeweiligen normalerweise offenen Kontakten oder mit jeweiligen normalerweise geschlossenen Kontakten verbunden sind, so daß eine Reihen- oder Parallelverbindung von jeder Spannungsversorgungseinheit vorliegt.

6. Anordnung nach Anspruch 3 oder 4, gekennzeichnet durch eine Vielzahl von Paaren von Dioden, wobei jedes Paar eine erste und zweite Diode aufweist, wobei jede der Dioden einen jeweiligen positiven und negativen Anschluß aufweist, wobei jedes Paar von Dioden mit einem jeweiligen elektromechanischen Schalter derart verbunden ist, daß die erste Diode (D101a-105a) des Paares durch seinen positiven Anschluß mit dem ersten normalerweise offenen Kontakt (NO101a-105a) des Schalters und durch ihren negativen Anschluß mit dem ersten gemeinsamen Kontakt (COM101a-105a) des Schalters verbunden ist, und die zweite Diode des Paars durch ihren positiven Anschluß mit dem zweiten gemeinsamen Anschluß (COM101b-105b) des Schalters und durch ihren negativen Anschluß mit dem zweiten normalerweise offenen Kontakt (NO101b-105b) des Schalters verbunden ist.

7. Anordnung nach Anspruch 6, dadurch gekennzeichnet, daß die ersten Dioden (D101a-105a) zwischen dem Festkörperschalter (SS100) und den ersten gemeinsamen Kontakten (COM101a-105a) der elektromechanischen Schalter angeschlossen sind, und die zweiten Dioden (D101b-105b) mit den zweiten gemeinsamen Kontakten (COM101b-105b) und mit dem positiven Ausgangsanschluß der Spannungsversorgung verbunden sind.

8. Anordnung nach Anspruch 7, dadurch gekennzeichnet, daß die normalerweise offenen Kontakte (NO101-105) der elektromechanischen Schalter mit den positiven und negativen Ausgangsanschlüssen der Spannungsversorgung verbunden sind und die normalerweise geschlossenen Kontakte (NO101-105) zwischen einem jeweiligen Paar von Spannungsversorgungseinheiten angeschlossen sind.

9. Anordnung nach einem der Anprüche 6 bis 8, gekennzeichnet durch eine Einrichtung zum Steuern des Festkörperschalters (SS100) zum Unterbrechen der Versorgung der elektromechanischen Schalter während des Schaltens zur Verhinderung einer Funkenbildung und zur Beseitigung von Verlusten über den ersten und zweiten Dioden.

10. Anordnung nach Anspruch 9, dadurch gekennzeichnet, daß die Einrichtung zum Steuern des Festkörperschalters (SS100) einen Stromdetektor (CT100), der mit dem Anker verbunden ist, aufweist, wobei der Stromdetektor (CT100) Steuersignale an den Festkörperschalter rückkoppelt.

11. Anordnung nach Anspruch 9, dadurch gekennzeichnet, daß die Einrichtung zum Steuern des Festkörperschalters einen Spannungsdetektor (VT100) aufweist, der mit dem Ausgang der Verbundspannungsversorgung verbunden ist, wobei der Spannungsdetektor (VT100) Steuersignale an den Festkörperschalter rückkoppelt.

12. Anordnung nach einem der Ansprüche 1 bis 11, dadurch gekennzeichnet, daß die Einrichtung zum Steuern des Festkörperschalters (SS100) eine manuelle Steuereinrichtung ist.

13. Anordnung nach einem der Ansprüche 1 bis 11, dadurch gekennzeichnet, daß die Einrichtung zum Steuern des Festkörperschalters (SS100) ein Controller (CCU) ist, der auf Eingaben einschließlich der Rückkopplung des Ankerstroms anspricht.

14. Anordnung nach einem der Ansprüche 1 bis 13, dadurch gekennzeichnet, daß die Einrichtung zum Ändern der Intensität des durch die Feldwicklung (F101) erzeugten Felds durch eine Einrichtung zum Abgreifen der Feldwicklung gebildet ist.

15. Anordnung nach einem der Ansprüche 1 bis 13, dadurch gekennzeichnet, daß die Einrichtung zum Ändern der Intensität des durch die Feldwicklung (F101) erzeugten Felds durch einen variablen Widerstand gebildet ist, der mit der Feldwicklung in Reihe geschaltet ist.

16. Anordnung nach einem der Ansprüche 1 bis 13, dadurch gekennzeichnet, daß die Einrichtung zum Ändern der Intensität des durch die Feldwicklung (F101) erzeugten Felds durch einen Feld-Controller (FVP) gebildet ist, der aus einer Spannungsversorgung mit variablem Widerstand gebildet ist.

17. Anordnung nach einem der Ansprüche 1 bis 16, gekennzeichnet durch eine Einrichtung zum Trimmen der gestuften Ausgangsspannung.

18. Anordnung nach Anspruch 17, dadurch gekennzeichnet, daß der Festkörperschalter (SS100) die Einrichtung zum Trimmen der Stufenausgangsspannung bildet.

19. Anordnung nach Anspruch 4 und 17, dadurch gekennzeichnet, daß einer der elektromechanischen Schalter die Einrichtung zum Trimmen der Stufenausgangsspannung bildet.

## Revendications

1. Montage d'une source de tension composée et en échelon et d'une commande de champ pour un moteur à courant continu, comprenant au moins un enroulement de champ (F101) et un induit (A101), le montage comprenant un régisseur (CCU) et une source de tension composée et en échelon (ASP101), constituée par une pluralité d'unités d'alimentation en courant continu (U1 à U6) destinées à être reliées en série et/ou en parallèle afin de fournir une tension de sortie en échelon, le régisseur comprenant des premiers et des seconds moyens de commande à actionnement indépendant, les premiers moyens de commande étant destinés à modifier l'intensité du champ produit par l'enroulement de champ (F101), l'induit (A101) étant relié à la source de tension composée et en échelon au moyen d'un commutateur à semi-conducteur (SS100) monté en série pour le réglage de la tension de sortie, et les seconds moyens de commande commandant le commutateur à semi-conducteur, pour ainsi commander la vitesse du moteur de manière plus continue que ne le permet la variation seule de la fourniture de tension en échelon à l'induit.

2. Montage selon la revendication 1, dans lequel le commutateur à semi-conducteur (SS100) est un commutateur linéaire.

3. Montage selon la revendication 1, dans lequel le commutateur à semi-conducteur (SS100) est un commutateur à onde découpée ou un commutateur à modulation de largeur d'impulsion.

4. Montage selon l'une quelconque des revendications 1 à 3, comprenant en outre une pluralité de commutateurs électromécaniques (SW101 à 105), chacun étant monté entre une paire respective d'unités d'alimentation en courant, chacun des commutateurs électromécaniques ayant un premier (COM101a à 105a) et un second (COM101b à 105b) contacts communs, un premier (NC101a à 105a) et un second (NC101b à 105b) contacts normalement fermés, et un premier (NO101a à 105a) et un second (NO101b à 105b) contacts normalement ouverts, le premier contact commun de chaque commutateur électromécanique étant relié au second contact normalement fermé de ce commutateur, et le second contact commun étant relié au premier contact normalement fermé de ce commutateur.

5. Montage selon la revendication 4, dans lequel la borne négative de chaque unité d'alimentation en courant est reliée à la fois au premier contact commun (COM101a à 105a) et au second contact normalement fermé (NC101b à 105b) d'un commutateur électromécanique associé, tandis que la borne positive d'une unité adjacente d'alimentation en courant est reliée au premier contact normalement fermé (NC101a à 105a) et au second contact commun (COM101b à 105b) dudit commutateur, si bien que, lorsque chaque commutateur électromécanique est actionné, les contacts communs respectifs sont reliés aux contacts respectifs normalement ouverts ou aux contacts respectifs normalement fermés, pour ainsi constituer un montage en série ou en parallèle de chaque unité d'alimentation en courant.

6. Montage selon la revendication 3 ou la revendication 4, comprenant en outre une pluralité de paires de diodes, chaque paire comprenant une première et une seconde diodes, chacune des diodes ayant des bornes respectives positive et négative, et chaque paire de diodes étant reliée à un commutateur électromécanique respectif, de telle manière que la première diode (D101a à 105a) de cette paire soit reliée par sa borne positive au premier contact normalement ouvert (NO101a à 105a) de ce commutateur et, par sa borne négative, au premier contact commun (COM101a à 105a) de ce commutateur, et que la seconde diode de cette paire soit reliée par sa borne positive au second contact commun (COM101b à 105b) de ce commutateur et, par sa borne négative, au second contact normalement ouvert (NO101b à 105b) de ce commutateur.

7. Montage selon la revendication 6, dans lequel les premières diodes (D101a à 105a) sont montées entre le commutateur à semi-conducteur (SS100) et les premiers contacts communs (COM101a à 105a) des commutateurs électromécaniques, et les secondes diodes (D101b à 105b) sont reliées aux seconds contacts communs (COM101b à 105b) et à la borne de sortie positive de la source d'alimentation.

8. Montage selon la revendication 7, dans lequel les contacts normalement ouverts (NO101 à 105) des commutateurs électromécaniques sont reliés aux bornes de sortie positive et négative de la source d'alimentation, et les contacts normalement fermés (NC101 à 105) sont montés entre une paire respective des unités d'alimentation en courant.

9. Montage selon l'une quelconque des revendications 6 à 8, comprenant en outre des moyens servant à commander le commutateur à semi-conducteur (SS100) afin qu'il coupe l'amenée de courant aux commutateurs électromécaniques pendant la commutation afin d'éviter un jaillissement d'étincelles et d'éliminer des pertes aux bornes des premières et secondes diodes.

10. Montage selon la revendication 9, dans lequel les moyens servant à commander le commutateur à semi-conducteur (SS100) comprennent un détecteur de courant (CT100) relié à l'induit, le détecteur de courant (CT100) réinjectant des signaux de commande à l'entrée du commutateur à semi-conducteur.

11. Montage selon la revendication 9, dans lequel les moyens servant à commander le commutateur à semiconducteur comprennent un détecteur de tension (VT100) relié à la sortie de la source de tension composée, le détecteur de tension (VT100) réinjectant des signaux de commande à l'entrée du commutateur à semi-conducteur.

12. Montage selon l'une quelconque des revendications 1 à 11, dans lequel les moyens servant à commander le commutateur à semi-conducteur (SS100) sont des moyens de commande manuelle.

13. Montage selon l'une quelconque des revendications 1 à 11, dans lequel les moyens servant à commander le commutateur à semi-conducteur (SS100) sont un régisseur (CCU) réagissant à des entrées, comprenant une réinjection du courant d'induit.

14. Montage selon l'une quelconque des revendications 1 à 13, dans lequel les moyens destinés à modifier l'intensité du champ produit par l'enroulement de champ (F101) sont constitués par des moyens de prélèvement sur l'enroulement de champ.

15. Montage selon l'une quelconque des revendications 1 à 13, dans lequel les moyens destinés à modifier l'intensité du champ produit par l'enroulement de champ (F101) sont constitués par une résistance variable montée en série avec l'enroulement de champ.

16. Montage selon l'une quelconque des revendications 1 à 13, dans lequel les moyens destinés à modifier l'intensité du champ produit par l'enroulement de champ (F101) sont constitués par un régisseur de champ (FVP) formé par une alimentation en courant à résistance variable.

17. Montage selon l'une quelconque des revendications 1 à 16, comprenant en outre des moyens pour l'ajustage de la tension de sortie en échelon.

18. Montage selon la revendication 17, dans lequel le commutateur à semi-conducteur (SS100) constitue le moyen d'ajustage de la tension de sortie en échelon.

19. Montage selon les revendications 4 et 17, dans lequel l'un des commutateurs électromécaniques constitue le moyen d'ajustage de la tension de sortie en échelon.
